# EUROPEAN PATENT APPLICATION

(11) **EP 4 782 489 A1**
(43) Date of publication of application: **29.07.2026**
(21) Application number: 24867804.7
(22) Date of filing: 12.04.2024
(51) Int. Cl.: C08J 11/12, B01J 19/12

(54) **INJECTION DEVICE, PROCESSING SYSTEM, AND PROCESSING METHOD**

(30) Priority: 19.09.2023 JP 2023150839
(71) Applicant: The Japan Steel Works, Ltd., Tokyo 141-0032 (JP)
(72) Inventor: UMEDA Mitsuhide, Tokyo 141-0032 (JP); ISHIGURO Ryo, Tokyo 141-0032 (JP); SHIGEMATSU Tomoko, Tokyo 141-0032 (JP); FUKUDA Mizuka, Tokyo 141-0032 (JP)
(74) Representative: Simmons & Simmons LLP (Munich)
(86) International application number: PCT/JP2024/014766
(87) International publication number: WO 2025/062715

(57) **Abstract**

An injection device (10) comprises a receiving part (110), a conveyance part (120), a decomposition process region (130), an irradiation device (140), an injection part (150), and a delivery port (160). The receiving part (110) receives a processing target from outside. The conveyance part (120) conveys the processing target received from the receiving part (110) while heating the processing target and supplies the processing target downstream. The decomposition process region (130) has, downstream of the conveyance part (120), a space that can retain a preset amount of the processing target. The irradiation device (140) irradiates the processing target with microwaves in the decomposition process region (130). The injection part (150) pushes, to the outside of the decomposition process region (130), the processing target that has received microwaves and that has been thermally decomposed. The delivery port (160) is a flow path for delivering, to the outside, the processing target that has been pushed out by the injection part (150).

## Description

### Technical Field

The present invention relates to an injection apparatus, a processing system, and a processing method.

### Background Art

As a technology for decomposing waste plastic and extracting reusable materials therefrom, there is a method called chemical recycling.

For example, a processing apparatus disclosed in Patent Literature 1 heats waste plastic, thermally decomposes chlorine-based polymers, and thereby generates chlorine compounds. By doing so, the processing apparatus separates waste plastic into molten waste plastic and chlorine compounds.

### Citation List

### Patent Literature

[Patent Literature 1] Japanese Unexamined Patent Application Publication No. 2002-317072

### Summary of Invention

It has been desired to further improve recycling technologies in order to realize the recycling-oriented society.

The present disclosure has been made in order to solve such a problem, and an object thereof is to provide an injection apparatus and the like capable of efficiently recovering reusable materials.

An injection apparatus according to the present disclosure includes a receiving unit, a conveyance unit, a decomposition processing area, an irradiation apparatus, an injection unit, and a sending-out port. The receiving unit receives a material to be processed from outside thereof. The conveyance unit conveys the material to be processed received from the receiving unit while heating the material to be processed and supplies the material to be processed to a downstream side. The decomposition processing area includes a space in which a predetermined amount of the material to be processed can be made to stay on a downstream side of the conveyance unit. The irradiation apparatus irradiates the material to be processed with a microwave in the decomposition processing area. The injection unit pushes the material to be processed out of the decomposition processing area, the material to be processed having been thermally decomposed by being irradiated with the microwave. The sending-out port serves as a flow path for sending out the material to be processed pushed out by the injection unit to outside thereof.

In a processing method according to the present disclosure, a processing system performs the following method. The processing system receives a material to be processed into the processing system. The processing system conveys the received material to be processed while heating the material to be processed and supplies the material to be processed to a decomposition processing area provided downstream. The processing system makes a predetermined amount of the material to be processed stay in the decomposition processing area. The processing system irradiates the material to be processed with a microwave in the decomposition processing area. The processing system pushes the material to be processed out of the decomposition processing area from a sending-out port provided further downstream, the material to be processed having been thermally decomposed by being irradiated with the microwave.

According to the present disclosure, it is possible to provide an injection apparatus, a processing system, and a processing method capable of efficiently recovering reusable materials.

### Brief Description of Drawings

Fig. 1 is an overall configuration diagram of a processing system according to a first embodiment;
Fig. 2 is a configuration diagram of an injection apparatus according to the first embodiment;
Fig. 3 is a flowchart of a processing method according to the first embodiment;
Fig. 4 is a configuration diagram of an injection apparatus according to a second embodiment; and
Fig. 5 is a configuration diagram of a processing system according to a third embodiment.

### Description of Embodiments

The present disclosure will be described hereinafter through embodiments of the present disclosure, but the present disclosure according to the claims is not limited to the below-shown embodiments. Further, not all of the components/structures described in the embodiments are indispensable as means for solving the problem. In order to clarify the explanation, the following descriptions and drawings are omitted and simplified as appropriate. Note that the same reference numerals are assigned to the same elements throughout the drawings, and redundant descriptions thereof are omitted as appropriate.

### <First Embodiment>

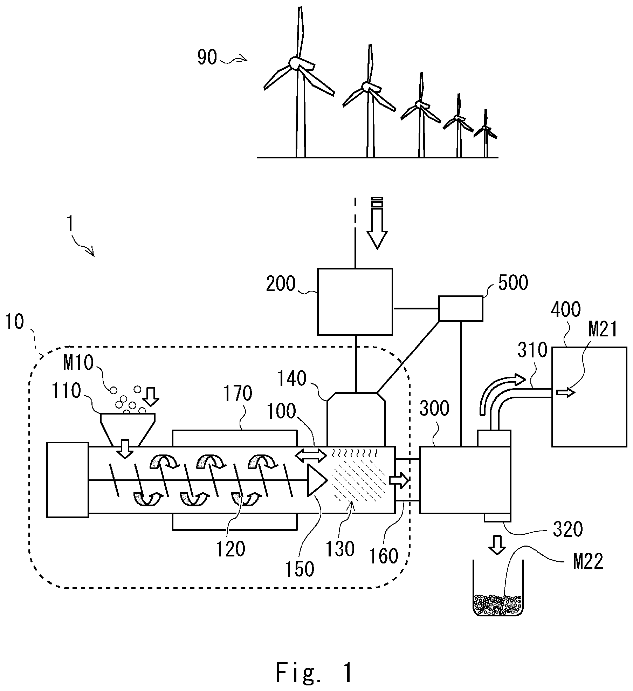

Embodiments according to the present invention will be described hereinafter with reference to the drawings. Fig. 1 is an overall configuration diagram of a processing system according to a first embodiment. Each of the components/structures of a processing system 1 shown in Fig. 1 is schematically shown to facilitate the understanding thereof. The processing system 1 thermally decomposes a material to be processed M10 and recovers a first product M21 and a second product M22. The processing system 1 includes, as main components, an injection apparatus 10, a secondary battery 200, a separation apparatus 300, a reservoir 400, and a control unit 500.

The injection apparatus 10 will be described hereinafter. The injection apparatus 10 receives and thermally decomposes a material to be processed M10. The injection apparatus 10 includes, as main components, a receiving unit 110, a conveyance unit 120, a decomposition processing area 130, an irradiation apparatus 140, an injection unit 150, and a sending-out port 160.

The receiving unit 110 is an opening for receiving the material to be processed M10 from the outside thereof into the injection apparatus 10. The receiving unit 110 supplies the received material to be processed M10 to the interior of a barrel 100 of the injection apparatus 10. The receiving unit 110 may include a feeder for receiving the material to be processed M10 while measuring its amount or the like.

The material to be processed M10 contains at least a resin and a catalyst used to thermally decompose the resin. The resin is, for example, an arbitrary thermoplastic resin such as polyethylene (PE), polypropylene (PP), polycarbonate (PC), acrylonitrile butadiene styrene (ABS), or polyamide (PA), or is an arbitrary thermosetting resin such as epoxy, unsaturated polyester, polyimide, or polyurethane. Further, the resin may be a composite material in which fibers such as carbon fibers, glass fibers, or cellulose are contained in a thermoplastic resin or a thermosetting resin. The catalyst contains a substance that generates heat when irradiated with predetermined microwaves and thereby accelerates the thermal decomposition of the resin. More specifically, the catalyst is an electromagnetic-wave absorber such as an iron oxide or carbon fibers. Further, the catalyst may also contain a substance that accelerates the thermal decomposition, such as citric acid.

The conveyance unit 120 conveys the material to be processed M10 received from the receiving unit 110 while heating it, and supplies it to the downstream side. The conveyance unit 120 includes a screw that is housed in the cylindrical barrel 100 and rotatably supported. The conveyance unit 120 conveys the material to be processed M10 to the decomposition processing area 130 provided on the downstream side of the barrel 100. The conveyance unit 120 is configured to control the amount of the material to be processed M10 sent out to the decomposition processing area 130.

The screw includes a shaft extending along the direction in which the barrel 100 extends, and a spiral flight provided on the outer periphery of the shaft. As the shaft of the screw rotates, the flight continuously pushes and moves the material to be processed M10 supplied to the barrel 100 in the rotating direction and in the downstream direction. In this way, the screw conveys the material to be processed M10 while stirring it. Further, the conveyance unit 120 includes a temperature control device 170 provided in at least a part of the barrel 100. The temperature control device 170 heats the barrel 100. In this way, the conveyance unit 120 can convey the material to be processed M10, which is to be conveyed, while heating it. The conveyance unit 120 may stir or knead the heated material to be processed M10 while conveying it.

Examples of the temperature control device 170 include various heaters whose temperature can be controlled, such as a sheath heater, a coil heater, or a ceramic heater. The temperature control device 170 may be a heating-medium heater in which a heated fluid is circulated. The temperature control device 170 may include, for example, a chiller unit for circulating a cooled fluid, or cooling fins and/or cooling fans for promoting heat dissipation.

The decomposition processing area 130 includes a space in which a predetermined amount of the material to be processed M10 can be made to stay on the downstream side of the conveyance unit 120. The decomposition processing area 130 is a space for making the material to be processed M10 absorb microwaves emitted by the irradiation apparatus 140.

The irradiation apparatus 140 irradiates the material to be processed M10 with microwaves in the decomposition processing area 130. The microwaves are, for example, electromagnetic waves having a frequency of 300 MHz to 30 GHz, and preferably electromagnetic waves having a frequency of 2.45 GHz (2.45 gigahertz). The irradiation apparatus 140 includes at least a magnetron for generating microwaves. The output of the magnetron is, for example, about 1,000 watts. The irradiation apparatus 140 irradiates the decomposition processing area 130 for, for example, about 5 to 10 minutes with microwaves. Note that the output of the magnetron and the irradiation time of the irradiation apparatus 140 shown above are merely examples, and the operation of the irradiation apparatus 140 in this embodiment is not limited to the example shown here.

As the irradiation apparatus 140 irradiates the decomposition processing area 130 with microwaves, the material to be processed M10 staying in the decomposition processing area 130 is irradiated with the microwaves. Substances that absorb microwaves, such as an electromagnetic-wave absorber, contained in the material to be processed M10, which has been irradiated with the microwaves, are heated, so that their temperatures rise. As a result of this, the resin mixed in the material to be processed M10 is also heated and thermally decomposed. At this point, the temperature in the decomposition processing area 130 is, for example, 400°C to 900°C.

The polymer(s) of the heated resin is decomposed and converted into hydrogen, a lower hydrocarbon(s), an organic gas(s), and other intermediate products. When the irradiation apparatus 140 further applies the microwaves, the thermal decomposition proceeds, and a first product M21 and a second product M22 could be generated from the material to be processed M10. The first product M21 is a gas and contains hydrogen. The second product M22 is a substance(s) other than the first product M21 and contains carbon. The carbon is, for example, CNTs (carbon nanotubes). After the material to be processed M10 is decomposed into the first and the second products M21 and M22, the irradiation apparatus 140 stops the application of the microwaves.

The injection unit 150 pushes the material to be processed M10, which has been thermally decomposed by being irradiated with microwaves, out of the decomposition processing area 130. The injection unit 150 is provided, for example, at the tip of the screw of the conveyance unit 120. In this case, the injection unit 150 is provided so as to be retractable in the direction in which the barrel 100 extends (the left-right direction in the figure) together with the screw. The injection unit 150 enters the decomposition processing area 130 and pushes the first and the second products M21 and M22 generated from the material to be processed M10 out of the decomposition processing area 130. More specifically, the first and the second products M21 and M22 are pushed out of the barrel 100 through the sending-out port 160 provided at the end of the barrel 100 on the downstream side.

The sending-out port 160 serves as a flow path for sending out the material to be processed M10 pushed out by the injection unit 150 to the outside thereof. The sending-out port 160 is provided at the end of the barrel 100 on the downstream side. The sending-out port 160 is connected to the separation apparatus 300. Therefore, the first and the second products M21 and M22 pushed out from the decomposition processing area 130 are supplied to the separation apparatus 300 through the sending-out port 160.

The injection apparatus 10 has been described above. By the above-described configuration, the injection apparatus 10 thermally decomposes the received material to be processed M10, and supplies the first and the second products M21 and M22 generated after the thermal decomposition to the separation apparatus 300. Further, at least one irradiation apparatus 140 is provided on the downstream side of the receiving unit 110, and it is possible to change the conditions for applying microwaves by a plurality of the irradiation apparatuses 140.

The secondary battery 200 supplies electric power to the injection apparatus 10. More specifically, for example, the secondary battery 200 can supply electric power to the irradiation apparatus 140 of the injection apparatus 10. The secondary battery 200 is, for example, a lithium-ion battery.

Further, the secondary battery 200 can store electric power generated from renewable energy. The secondary battery 200 shown in Fig. 1 receives electric power supplied from a wind power generation system 90. By the above-described configuration, the processing system 1 including the secondary battery 200 thermally decomposes the material to be processed M10 while reducing the environmental burden. Note that the wind power generation system 90 is an embodiment of a power generation system using renewable energy. The power generation system using renewable energy may be, for example, one using solar light or geothermal heat. Further, the power generation system using renewable energy may include, for example, a system for generating electricity by a hydrogen boiler using generated hydrogen.

Note that the secondary battery 200 may be a reused product (reused product). The reused product includes, for example, a product that has been used in an electric vehicle or the like and then removed from the electric vehicle or the like because it no longer meets the specifications for use in the electric vehicle or the like. By adopting a reused product for the secondary battery 200, the processing system 1 can reduce the environmental burden.

The separation apparatus 300 receives the first and the second products M21 and M22 from the injection apparatus 10, and at least separates the first and the second products M21 and M22. The separation apparatus 300 sends out the first product M21 to the reservoir 400 through a sending-out pipe 310. In the reservoir 400, the received first product M21 is stored, for example, in a compressed state. The separation apparatus 300 may have a function of removing gases other than hydrogen from the first product M21 to be supplied to the reservoir 400. For example, when carbon dioxide is contained in the first product M21, the separation apparatus 300 removes the carbon dioxide from the first product M21 by a water replacement method. By the above-described configuration, the separation apparatus 300 extracts hydrogen from the thermally-decomposed material to be processed M10.

Further, the separation apparatus 300 extrudes the separated second product M22 to the outside thereof through a discharge port 320. The separation apparatus 300 may have a function of, when substances other than carbon are contained in the second product M22, separating carbon from the other substances. By the above-described configuration, the separation apparatus 300 extracts carbon from the thermally-decomposed material to be processed M10.

The control unit 500 is connected to at least the injection apparatus 10 so that it can communicate therewith, and controls the operation of the injection apparatus 10. The control unit 500 is a control apparatus including an arithmetic unit such as a CPU (Central Processing Unit), a memory, and a communication interface. The control unit 500 may also be connected to the secondary battery 200 and the separation apparatus 300 so that it can communicate therewith, and may control the injection apparatus 10 while acquiring data from these apparatuses.

The processing system 1 has been described above. In the processing system 1, the irradiation apparatus 140 of the injection apparatus 10 irradiates the material to be processed M10 with microwaves, and thereby heats the material to be processed M10 to a temperature at which hydrogen can be separated therefrom. Further, the irradiation apparatus 140 irradiates the material to be processed M10 with microwaves, and thereby heats the material to be processed M10 to a temperature at which carbon can be separated therefrom. In this way, the separation apparatus 300 separates and extracts hydrogen from the thermally-decomposed material to be processed M10. Further, the separation apparatus 300 separates and extracts carbon from the thermally-decomposed material to be processed M10.

The processing system 1 recovers hydrogen and carbon from the material to be processed M10 by the above-described configuration. The material to be processed M10 includes, for example, waste plastic. The Sustainable Development Goals (SDGs) adopted by the United Nations General Assembly include ensuring sustainable consumption and production. The processing system 1 can contribute to ensuring sustainable consumption and production by recovering reusable hydrogen and carbon from waste plastic. Further, the processing system 1 can receive at least a part of the electric power of apparatuses used in the processing system 1 from renewable energy. In this way, the processing system 1 can contribute to the realization of a sustainable society.

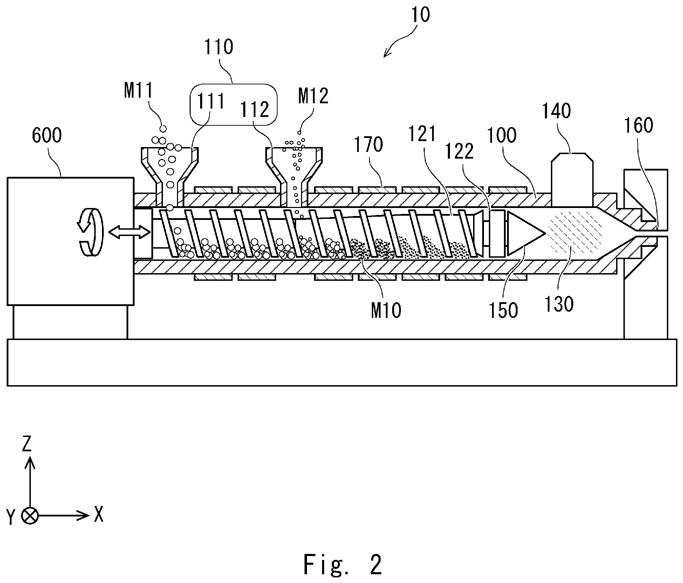

Next, the injection apparatus 10 will be further described with reference to Fig. 2. Fig. 2 is a configuration diagram of the injection apparatus 10. To facilitate the understanding, a part of the injection apparatus 10 is shown in cross section. The injection apparatus 10 includes, as main components, the receiving unit 110, a screw 121, the decomposition processing area 130, the irradiation apparatus 140, the injection unit 150, and the sending-out port 160. The injection apparatus 10 further includes the temperature control device 170 and a compound driving unit 600.

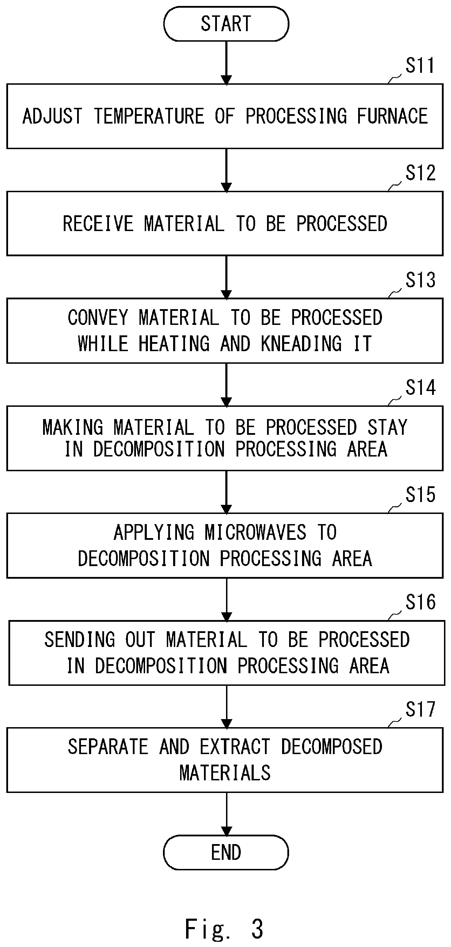

Note that for the sake of explanation of the positional relationship among components, a right-handed orthogonal coordinate system is shown in Fig. 2. Further, in Figs. 3 and subsequent figures, when an orthogonal coordinate system is shown, the X-axis, Y-axis, and Z-axis directions in Fig. 2 coincide with the X-axis, Y-axis, and Z-axis directions in the orthogonal coordinate system.

The barrel 100 is formed in a cylindrical shape and houses a screw 121 therein. The compound driving unit 600 is connected to the end of the barrel 100 on the upstream side corresponding to the left side in Fig. 2. Further, the barrel 100 includes the receiving unit 110 in an upper part thereof on the upstream side. Further, the barrel 100 includes the sending-out port 160 at the end thereof on the downstream side corresponding to the right side in Fig. 2.

The compound driving unit 600 includes a driving apparatus for driving the screw 121. The driving apparatus includes, for example, a motor and a reduction gear. The compound driving unit 600 includes a mechanism for rotationally moving the screw 121. The compound driving unit 600 also includes a mechanism for linearly moving the screw 121.

Note that the rotation of the screw 121 means the rotation of the screw 121 along the shaft of the screw 121. As the screw 121 rotates, the material to be processed M10 is conveyed to the downstream side. The linear movement of the screw 121 means that the screw 121 reciprocates (moves forward and backward) linearly along the shaft of the screw 121. By the linear movement of the screw 121, the injection unit 150 provided at the tip of the screw 121 sends out the material to be processed M10 staying in the decomposition processing area 130 to the sending-out port 160.

The receiving unit 110 includes a first receiving unit 111 and a second receiving unit 112. The first receiving unit 111 is positioned on the upstream side of the second receiving unit 112. The second receiving unit 112 is positioned on the downstream side of the first receiving unit 111. The first receiving unit 111 is a receiving port for receiving a resin M11. The second receiving unit 112 is a receiving port for receiving a catalyst M12.

Note that the receiving unit 110 may include a feeder(s) or a hopper(s). In this case, the receiving unit 110 may have a function of adjusting the amount of the catalyst M12 according to the amount of the resin M11 to be fed. Alternatively, the receiving unit 110 may have a function of adjusting the amount of the resin M11 according to the amount of the catalyst M12 to be fed. By the above-described configuration, the injection apparatus 10 can improve the degree of freedom of the combination of the resin M11 and the catalyst M12.

The screw 121 is one embodiment of the conveyance unit 120 shown in Fig. 1. The screw 121 is rotatably and linearly-movably supported by the compound driving unit 600 provided at the end of the barrel 100 on the upstream side. The screw 121 conveys the material to be processed M10 containing the resin M11 and the catalyst M12 while mixing them. The screw 121 includes at least a shaft extending from the upstream side toward the downstream side, and a spiral flight provided around the shaft. In addition to the spiral flight, the screw 121 may have a concave-convex shape for stirring or kneading the material to be processed M10.

The screw 121 includes the injection unit 150 at the end thereof on the downstream side. The shape of the injection unit 150 when observed along the direction in which the barrel 100 extends is similar to the cross section of the barrel 100, and has a gap through which the material to be processed M10 is pushed out to the downstream side from the gap between the injection unit 150 and the barrel 100.

By the linear movement of the screw 121, the injection unit 150 can send out the material to be processed M10 staying in the decomposition processing area 130 to the sending-out port 160. Note that the surface of the injection unit 150 facing the decomposition processing area 130 may have a concave-convex shape. By this configuration, the injection unit 150 can stir the material to be processed M10 staying in the decomposition processing area 130.

Further, in this case, the screw 121 may perform a rotation operation for stirring the material to be processed M10 staying in the decomposition processing area 130 while the irradiation apparatus 140 is applying microwaves. The rotation operation of the screw 121 at this time is referred to as a stirring operation. The stirring operation is, for example, different in the rotation speed and the rotation direction from the rotation operation when the screw 121 conveys the material to be processed M10 to the decomposition processing area 130 (it is referred to as a conveyance operation). For example, the rotation speed of the stirring operation is slower than that of the conveyance operation. Alternatively, the rotation direction of the stirring operation may be opposite to that of the conveyance operation. Note that the screw 121 may include a backflow preventing ring 122 at a part thereof supporting the injection unit 150.

The temperature control device 170 is provided on the outer periphery of the barrel 100. The temperature control device 170 heats the material to be processed M10 that is conveyed from the upstream side to the downstream side by the screw 121. The temperature control device 170 may include a thermometer for measuring the temperature of the barrel 100. As the temperature control device 170 heats the material to be processed M10, the material to be processed M10 is efficiently thermally decomposed in the decomposition processing area 130.

The sending-out port 160 provided at the end of the barrel 100 on the downstream side is a nozzle-like flow path for sending out the conveyed material to be processed M10 pushed out by the injection unit 150 to the outside thereof. The sending-out port 160 may include a valve that can be freely opened or closed.

The decomposition processing area 130 is provided in the vicinity of the sending-out port 160 on the downstream side of the barrel 100. The inner wall of the barrel 100 in the decomposition processing area 130 is formed of a material that easily reflects microwaves, such as stainless steel.

The irradiation apparatus 140 is provided at a position adjacent to the decomposition processing area 130. The irradiation apparatus 140 generates microwaves and irradiates the decomposition processing area 130 with the microwaves. Therefore, the barrel 100 includes a structure by which it makes the microwaves generated by the irradiation apparatus 140 pass through at least a part of the decomposition processing area 130. That is, at least a part of the inner wall of the barrel 100 includes a part where the decomposition processing area 130 can be irradiated with microwaves. The irradiation apparatus 140 includes a timer for measuring the irradiation time of microwaves. The irradiation apparatus 140 may include a thermometer for measuring the temperature in the decomposition processing area 130. The irradiation apparatus 140 may include a thermometer for measuring the pressure in the decomposition processing area 130.

The structure capable of making microwaves pass through the decomposition processing area 130 may be, for example, a structure in which an antenna for irradiating the decomposition processing area 130 with microwaves generated by the irradiation apparatus 140 is exposed. The structure capable of making microwaves pass through the decomposition processing area 130 may be, for example, a structure including a member which makes microwave generated by the irradiation apparatus 140 pass through the decomposition processing area 130 and prevents the material to be processed M10 and the thermally-decomposed first and second products M21 and M22 from passing through the decomposition processing area 130.

Next, a processing method performed by the processing system 1 will be described with reference to Fig. 3. Fig. 3 is a flowchart of a processing method according to the first embodiment. The processes described below may be, for example, instructions that the control unit 500 gives to the components of the processing system 1.

Firstly, the injection apparatus 10 adjusts the temperature of the barrel 100 which serves as a processing furnace (Step S11). More specifically, the temperature control device 170 of the injection apparatus 10 adjusts the output so that the thermometer installed in the barrel 100 indicates the temperature of the barrel 100 within a preset range.

Next, the receiving unit 110 of the injection apparatus 10 receives a material to be processed M10 (or a resin M11 and a catalyst M12) into the barrel 100 (Step S12).

Next, the screw 121 conveys the received material to be processed M10 while heating it (Step S13). The screw 121 supplies a preset amount of the material to be processed M10 to the decomposition processing area 130 provided on the downstream side thereof.

Next, the screw 121 makes the preset amount of the material to be processed M10 stay in the decomposition processing area 130 (Step S14). At this time, the screw 121 stops the conveyance operation after the preset amount of the material to be processed M10 is supplied to the decomposition processing area 130.

Next, the irradiation apparatus 140 irradiates the material to be processed M10 with microwaves in the decomposition processing area 130 (Step S15). Note that, in the process in which the irradiation apparatus 140 irradiates the material to be processed M10 with microwaves, the irradiation time and the irradiation output may be set in advance. In the process in which the irradiation apparatus 140 irradiates the material to be processed M10 with microwaves, the irradiation time and the irradiation output may be feedback-controlled by observing at least one of the temperature and the pressure in the decomposition processing area 130. When a predetermined stop condition is satisfied, the irradiation apparatus 140 terminates the application of the microwaves.

Next, the injection unit 150 pushes the material to be processed M10, which has been thermally decomposed by being irradiated with microwaves, out of the decomposition processing area 130 through the sending-out port 160 provided further downstream (Step S16). More specifically, the injection unit 150 moves from the upstream side to the downstream side to push out the material to be processed M10 present in the decomposition processing area 130 to the sending-out port 160. Note that, at this time, the material to be processed M10 has been decomposed into the first product M21 and the first product M21. Further, at this time, the injection unit 150 moves to the upstream side after pushing the material to be processed M10 out of the decomposition processing area 130.

Next, the separation apparatus 300 separates and extracts the received materials to be processed M10 (the first and the second products M21 and M22) (Step S17). Upon the separation apparatus 300 separates and extracts the first and the second products M21 and M22, the processing system 1 finishes the series of processes.

Note that when the above-described series of processes is started, the steps from the step S12 to the step S17 are successively performed in parallel with each other. By repeating the above-described intermittent operations, an injection apparatus 20 continuously thermally decomposes the material to be processed M10. Thus, the processing system 1 efficiently thermally decomposes the material to be processed M10. Therefore, by the processing method shown in Fig. 3, reusable materials can be efficiently recovered.

The first embodiment has been described above. By the above-described configuration, this embodiment can provide an injection apparatus, a processing system, and a processing method capable of efficiently recovering reusable materials.

### <Second Embodiment>

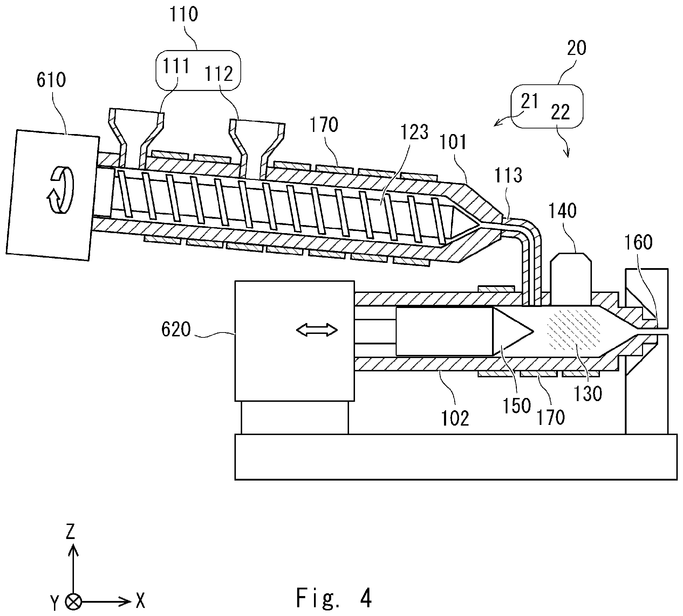

Next, a second embodiment will be described. The second embodiment differs from the first embodiment in the configuration of an injection apparatus. Fig. 4 is a configuration diagram of an injection apparatus 20 according to the second embodiment.

The injection apparatus 20 includes a measurement block 21 and a decomposition processing block 22. The measurement block 21 receives the material to be processed M10, stirs or kneads the received material to be processed M10 while heating it, and supplies a preset amount of the material to be processed M10 to the decomposition processing block 22. The decomposition processing block 22 thermally decomposes the material to be processed M10 received from the measurement block 21, and sends out the thermally-decomposed material to be processed M10 to the separation apparatus 300.

The measurement block 21 includes, as main components, a first barrel 101, the receiving unit 110, a screw for extrusion 123, the temperature control device 170, and a conveyance driving unit 610.

The first barrel 101 receives the material to be processed M10 (the resin M11 and the catalyst M12) from the receiving unit 110 (the first and the second receiving units 111 and 112), and supplies the received material to be processed M10 to a second barrel 102. The first barrel 101 houses the screw for extrusion 123. Further, the conveyance driving unit 610 is connected to the end of the first barrel 101 on the upstream side.

The screw for extrusion 123 is rotatably supported by the conveyance driving unit 610. The screw for extrusion 123 conveys the material to be processed M10 fed from the receiving unit 110 to the downstream side while stirring or kneading it. The first barrel 101 includes a sending-out port 113 at the end thereof on the downstream side. The sending-out port 113 serves as a flow path communicating with the second barrel 102. The material to be processed M10 conveyed by the screw for extrusion 123 is sent out to the second barrel 102 through the sending-out port 113.

The conveyance driving unit 610 is a driving apparatus which rotationally drives the first barrel 101. The conveyance driving unit 610 includes, for example, a motor and a reduction gear. The injection apparatus 20 can supply a preset amount of the material to be processed M10 to the second barrel 102 by controlling the rotation of the conveyance driving unit 610.

The decomposition processing block 22 thermally decomposes the material to be processed M10 received from the measurement block 21, and sends the thermally-decomposed material to be processed M10 (the first and the second products M21 and M22) out of the sending-out port 160. The decomposition processing block 22 includes, as main components, the second barrel 102, the decomposition processing area 130, the irradiation apparatus 140, the injection unit 150, the sending-out port 160, the temperature control device 170, and an injection driving unit 620.

The injection driving unit 620 is connected to one end (on the X-axis negative side) of the second barrel 102, and the second barrel 102 includes the sending-out port 160 at the other end (on the X-axis positive side) thereof. The injection driving unit 620 linearly-movably supports the injection unit 150. The injection unit 150 is a plunger provided in the second barrel 102 so as to be slidable without rattling.

The operation of the decomposition processing block 22 will be described below. In a case where the decomposition processing block 22 receives the material to be processed M10 from the measurement block 21, the injection unit 150 is located at one end side (the X-axis negative side). When the decomposition processing block 22 receives the material to be processed M10 from the measurement block 21, the irradiation apparatus 140 of the decomposition processing block 22 irradiates the material to be processed M10 with microwaves. Then, when the thermal decomposition of the material to be processed M10 is completed, the injection driving unit 620 of the decomposition processing block 22 moves the injection unit 150 to the other end side. By doing so, the decomposition processing block 22 sends the thermally-decomposed material to be processed M10 out of the sending-out port 160. When the sending-out of the material to be processed M10 is completed, the injection driving unit 620 moves the injection unit 150 to one end side again.

By repeating the above operation, the decomposition processing block 22 thermally decomposes the material to be processed M10 received from the measurement block 21 and supplies it to the separation apparatus 300. By repeating the above-described intermittent operations, the injection apparatus 20 continuously thermally decomposes the material to be processed M10.

As described above, the injection unit 150 of the decomposition processing block 22 includes an extrusion member different from the screw. This extrusion member is configured to move linearly to push out the material to be processed M10 in the decomposition processing area 130 to the sending-out port 160. By the above configuration, this embodiment can provide an injection apparatus, a processing system, and a processing method capable of efficiently recovering reusable materials.

### <Third Embodiment>

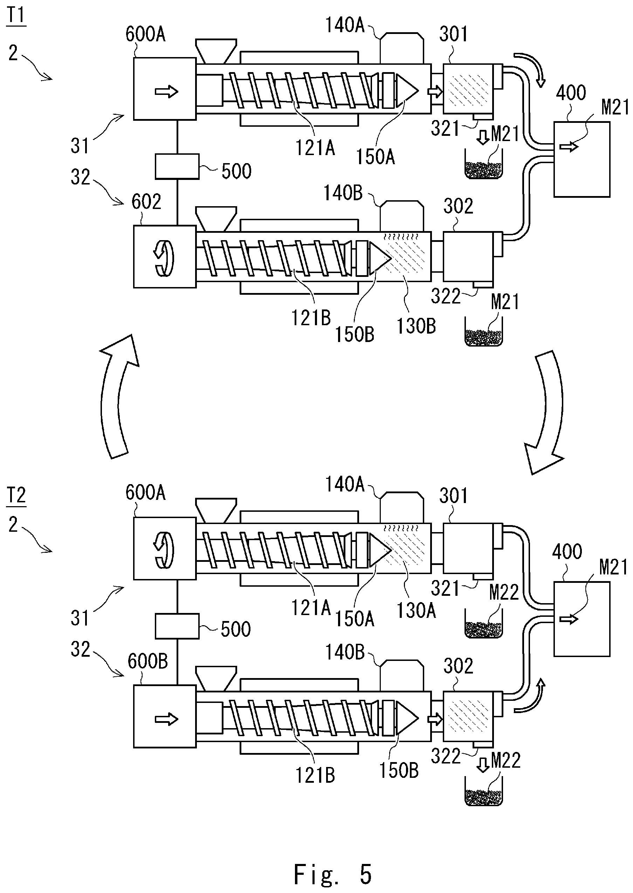

Next, a third embodiment will be described. The third embodiment differs from the above-described embodiments in that a plurality of injection apparatuses are provided. A processing system according to the third embodiment controls the plurality of injection apparatuses so as to perform predetermined operations. Fig. 5 is a block diagram of a processing system 2 according to the third embodiment. Fig. 5 shows two of the processing systems 2 in different states. The processing system 2 shown in the upper side of the figure shows the processing system 2 in a state T1. The processing system 2 shown in the lower side of the figure shows the processing system 2 in a state T2 different from the state T1.

The configuration of the processing system 2 will be described below. The processing system 2 includes a first injection apparatus 31 and a second injection apparatus 32 as injection apparatuses. The processing system 2 also includes a first separation apparatus 301, a second separation apparatus 302, the reservoir 400, and the control unit 500.

Each of the first and the second injection apparatuses 31 and 32 has a configuration similar to that of the injection apparatus 10 shown in Fig. 2. In the first and the second injection apparatuses 31 and 32, components similar to those of the injection apparatus 10 are denoted by the same reference numerals. However, the reference numeral of each of the components of the first and the second injection apparatuses 31 and 32 is followed by the letter A or B, respectively, in order to distinguish between them. For example, the first injection apparatus 31 includes a screw 121A, while the second injection apparatus 32 includes a screw 121B.

The first injection apparatus 31 is connected to the first separation apparatus 301. The first injection apparatus 31 supplies the thermally-decomposed material to be processed M10 to the first separation apparatus 301. The first separation apparatus 301 separates the first and the second products M21 and M22 from the received material to be processed M10. The first separation apparatus 301 supplies the separated first product M21 to the reservoir 400.

The second injection apparatus 32 is connected to the second separation apparatus 302. The second injection apparatus 32 supplies the thermally-decomposed material to be processed M10 to the second separation apparatus 302. The second separation apparatus 302 separates the first and the second products M21 and M22 from the received material to be processed M10. The second separation apparatus 302 supplies the separated first product M21 to the reservoir 400.

The control unit 500 controls the operations of the first and the second injection apparatuses 31 and 32. The control unit 500 controls the first and the second injection apparatuses 31 and 32 in such a manner that they alternately send out the material to be processed M10.

In the state T1 shown in the upper side of Fig. 5, the first injection apparatus 31 is in a state where the screw 121A has pushed out the material to be processed M10 from the first injection apparatus 31 into the first separation apparatus 301. Therefore, the first separation apparatus 301 supplies the received first product M21 to the reservoir 400.

Meanwhile, in the state T1, the screw 121B of the second injection apparatus 32 conveys the material to be processed M10 to a decomposition processing area 130B. Alternatively, the second injection apparatus 32 thermally decomposes the material to be processed M10 staying in the decomposition processing area 130B.

As described above, in the state T1, the first injection apparatus 31 sends out the thermally-decomposed material to be processed M10, and the second injection apparatus 32 does not send out the material to be processed M10.

In the state T2 shown in the lower side of Fig. 5, the screw 121A of the first injection apparatus 31 conveys the material to be processed M10 to a decomposition processing area 130A. Alternatively, the first injection apparatus 31 thermally decomposes the material to be processed M10 staying in the decomposition processing area 130A.

Meanwhile, in the state T2, the second injection apparatus 32 is in a state in which the screw 121B has pushed out the material to be processed M10 from the second injection apparatus 32 into the second separation apparatus 302. Therefore, the second separation apparatus 302 supplies the received first product M21 to the reservoir 400.

As described above, in the state T2, the first injection apparatus 31 does not send out the material to be processed M10, and the second injection apparatus 32 sends out the thermally-decomposed material to be processed M10.

The processing system 2 alternately performs the above-described states T1 and T2. The control unit 500 of the processing system 2 controls the first and the second injection apparatuses 31 and 32 in such a manner that they alternately send out the material to be processed M10 as described above. By doing so, the reservoir 400 can continuously receive the first product M21. Therefore, the processing system 2 can efficiently recover the first product M21.

The third embodiment has been described above. According to the third embodiment, it is possible to provide an injection apparatus, a processing system, and a processing method capable of efficiently recovering reusable materials.

Although the present invention has been described above with reference to the embodiments, the present invention is not limited by the above descriptions. Various modifications that can be understood by those skilled in the art can be made to the configuration and details of the present invention within the scope of the invention. For example, the extruder and the barrel according to the present disclosure are not limited to a twin-screw extrude. The extruder and the barrel according to the present disclosure may be a single-screw extruder.

This application is based upon and claims the benefit of priority from Japanese patent application No. 2023-150839, filed on September 19, 2023, the disclosure of which is incorporated herein in its entirety by reference.

### Reference Signs List

- 1: PROCESSING SYSTEM
- 2: PROCESSING SYSTEM
- 10: INJECTION APPARATUS
- 20: INJECTION APPARATUS
- 21: MEASUREMENT BLOCK
- 22: DECOMPOSITION PROCESSING BLOCK
- 31: FIRST INJECTION APPARATUS
- 32: SECOND INJECTION APPARATUS
- 90: WIND POWER GENERATION SYSTEM
- 100: BARREL
- 101: FIRST BARREL
- 102: SECOND BARREL
- 110: RECEIVING UNIT
- 111: FIRST RECEIVING UNIT
- 112: SECOND RECEIVING UNIT
- 120: CONVEYANCE UNIT
- 121: SCREW
- 123: SCREW FOR EXTRUSION
- 130: DECOMPOSITION PROCESSING AREA
- 140: IRRADIATION APPARATUS
- 141: FIRST IRRADIATION APPARATUS
- 142: SECOND IRRADIATION APPARATUS
- 150: INJECTION UNIT
- 160: SENDING-OUT PORT
- 170: TEMPERATURE CONTROL DEVICE
- 200: SECONDARY BATTERY
- 300: SEPARATION APPARATUS
- 301: FIRST SEPARATION APPARATUS
- 302: SECOND SEPARATION APPARATUS
- 310: SENDING-OUT PIPE
- 320: DISCHARGE PORT
- 400: RESERVOIR
- 500: CONTROL UNIT
- 600: COMPOUND DRIVING UNIT
- 610: CONVEYANCE DRIVING UNIT
- 620: INJECTION DRIVING UNIT
- A12: DECOMPOSITION PROCESSING AREA
- M10: MATERIAL TO BE PROCESSED
- M11: RESIN
- M12: CATALYST
- M21: FIRST PRODUCT
- M22: SECOND PRODUCT

## Claims

1. An injection apparatus comprising:
a receiving unit configured to receive a material to be processed from outside thereof;
a conveyance unit configured to convey the material to be processed received from the receiving unit while heating the material to be processed and supply the material to be processed to a downstream side;
a decomposition processing area including a space in which a predetermined amount of the material to be processed can be made to stay on a downstream side of the conveyance unit;
an irradiation apparatus configured to irradiate the material to be processed with a microwave in the decomposition processing area;
an injection unit configured to push the material to be processed out of the decomposition processing area, the material to be processed having been thermally decomposed by being irradiated with the microwave; and
a sending-out port configured to serve as a flow path for sending out the material to be processed pushed out by the injection unit to outside thereof.

2. The injection apparatus according to claim 1, wherein the conveyance unit comprises a screw that is housed in a barrel for receiving the material to be processed and rotatably supported.

3. The injection apparatus according to claim 2, wherein the screw of the conveyance unit performs a rotation operation for stirring the material to be processed when the irradiation apparatus is irradiating the material to be processed with the microwave.

4. The injection apparatus according to claim 2, wherein the injection apparatus supports the injection unit at a tip of the screw of the conveyance unit.

5. The injection apparatus according to claim 2, wherein
the injection unit comprises an extrusion member different from the screw, and
the extrusion member is configured to linearly move to push out the material to be processed in the decomposition processing area to the sending-out port.

6. The injection apparatus according to any one of claims 1 to 5, wherein
the receiving unit receives the material to be processed containing at least a resin,
the irradiation apparatus thermally decomposes the material to be processed by irradiating the material to be processed with the microwave so that at least hydrogen can be separated therefrom, and
the injection unit pushes the thermally-decomposed material to be processed out of the decomposition processing area.

7. The injection apparatus according to claim 6, wherein
the receiving unit comprises a first receiving unit configured to receive the resin and a second receiving unit configured to receive a catalyst for accelerating the thermal decomposition, and
the conveyance unit conveys the material to be processed containing the resin and the catalyst while mixing them.

8. The injection apparatus according to claim 7, wherein the irradiation apparatus thermally decomposes the material to be processed by irradiating the material to be processed with the microwave having a frequency of 2.45 GHz.

9. A processing system comprising:
the injection apparatus according to claim 6, and
a separation apparatus configured to separate and extract the hydrogen from the material to be processed sent out from the sending-out port of the injection apparatus.

10. The processing system according to claim 9, wherein
the irradiation apparatus of the injection apparatus thermally decomposes the material to be processed by irradiating the material to be processed with the microwave so that carbon can be further separated therefrom, and
the separation apparatus further separates and extracts carbon from the thermally-decomposed material to be processed.

11. The processing system according to claim 10, comprising:
a first injection apparatus configured to supply the material to be processed to the separation apparatus, the first injection apparatus being the injection apparatus;
a second injection apparatus configured to supply the material to be processed to the separation apparatus, the second injection apparatus being the injection apparatus different from the first injection apparatus; and
a control unit configured to control an operation of the first injection apparatus and an operation of the second injection apparatus, wherein the control unit controls the first and the second injection apparatuses in such a manner that they alternately send out the material to be processed.

12. The processing system according to claim 10, further comprising a secondary battery configured to supply electric power to the irradiation apparatus.

13. The processing system according to claim 12, wherein the secondary battery can store electric power generated by renewable energy.

14. A processing method comprising the steps of:
receiving a material to be processed into a processing system; conveying the received material to be processed while heating the material to be processed and supplying the material to be processed to a decomposition processing area provided downstream;
making a predetermined amount of the material to be processed stay in the decomposition processing area;
irradiating the material to be processed with a microwave in the decomposition processing area; and
pushing the material to be processed out of the decomposition processing area from a sending-out port provided further downstream, the material to be processed having been thermally decomposed by being irradiated with the microwave.
